Europäisches Patentamt

(19) European Patent Office

Office européen des brevets

(11) Numéro de publication: **0 237 404**
**B1**

(12) **FASCICULE DE BREVET EUROPEEN**

(45) Date de publication du fascicule du brevet:
08.08.90

(51) Int. Cl.⁵: **G01S 13/44**

(21) Numéro de dépôt: **87400426.0**

(22) Date de dépôt: **26.02.87**

(54) **Procédé de traitement des signaux somme et différence d'un radar du type monopulse, en vue d'estimer la phase parasite introduite entre ces signaux par les circuits hyperfréquence de formation des voies somme et différence.**

(30) Priorité: **28.02.86 FR 8602877**

(43) Date de publication de la demande:
**16.09.87 Bulletin 87/38**

(45) Mention de la délivrance du brevet:
**08.08.90 Bulletin 90/32**

(84) Etats contractants désignés:
**DE GB IT NL**

(56) Documents cités:
**EP-A- 0 038 734**
**US-A- 3 794 998**
**US-A- 4 368 468**

(73) Titulaire: **THOMSON-CSF, 51, Esplanade du Général de Gaulle, F-92800 Puteaux(FR)**

(72) Inventeur: **Poux, Jean-Paul, THOMSON-CSF SCPI 19, avenue de Messine, F-75008 Paris(FR)**

(74) Mandataire: **El Manouni, Josiane et al, THOMSON-CSF SCPI, F-92045 PARIS LA DEFENSE CEDEX 67(FR)**

**Description**

La présente invention se rapporte d'une manière générale au domaine du radar et concerne plus particulièrement un procédé de traitement des signaux d'un radar du type monopulse, en vue d'estimer la phase parasite introduite entre ces signaux par les circuits hyperfréquence de formation des voies somme et différence.

Il est connu qu'un radar du type monopulse permet la localisation angulaire de cibles par traitement de différents signaux reçus simultanément de ces cibles et correspondant à différentes directivités de faisceaux.

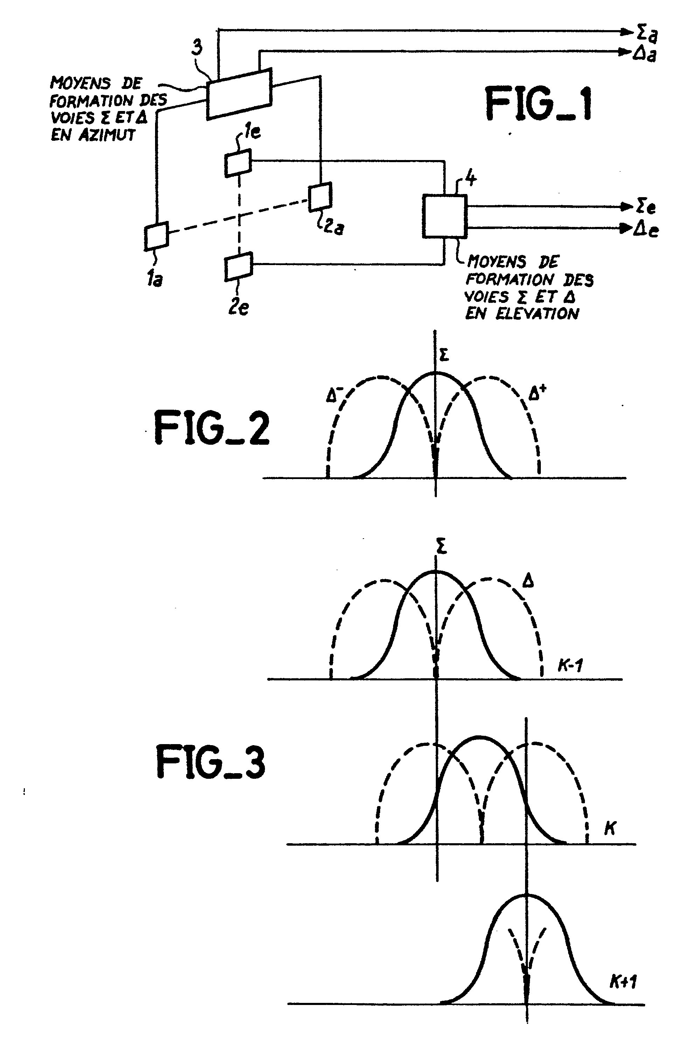

Ainsi, comme représenté très schématiquement sur la figure 1, en prévoyant deux sources respectivement dans le plan azimut (1a, 2a) et dans le plan élévation (1e, 2e), on dispose en réception, pour chacun de ces plans, de deux signaux sont on peut former, par des moyens hyperfréquence (3, 4), la somme $\Sigma$ et la différence $\Delta$, ce qui revient à disposer d'une antenne avec un faisceau correspondant à la voie $\Sigma$ et un autre faisceau correspondant à la voie $\Delta$, et permet ainsi une localisation angulaire des cibles de façon simple.

Il est également connu que, le rerayonnement d'une cible étant la somme des ondes réfléchies par chacun des éléments réflecteurs qui la composent, les signaux S et D reçus respectivement sur les voies somme et différence, en azimut ou en élévation, ont pour représentation complexe:

$$S = \sum_i s(\theta_i) \, a_i \, e^{j(\phi_i - w \frac{2d_i}{c})}$$

$$D = e^{-j\Psi} \sum_i d(\theta_i) \, a_i \, e^{j(\phi_i - w \frac{2d_i}{c})}$$

avec:

$s(\theta_i)$ : gain de la voie somme à l'angle $\theta_i$ ;

$d(\theta_i)$ : gain de la voie différence à l'angle $\theta_i$ ;

$a_i$: amplitude relative au $i^{ème}$ réflecteur ;

$\phi_i$: déphasage introduit par le $i^{ème}$ réflecteur ;

$d_i$: distance entre le radar et le $i^{ème}$ réflecteur ;

$\Psi$: phase parasite introduite entre les voies $\Sigma$ et $\Delta$ par les circuits hyperfréquence de formation des voies somme et différence.

Il est également connu que, dans le cas particulier du plan élévation, la phase parasite $\Psi$ entre les voies somme et différence peut être évaluée de la façon suivante.

Soit $P = S \times D^*$

$$= e^{j\Psi} \left( \sum_i s(\theta_i) \, d(\theta_i) \, a_i^2 + \sum_{\substack{i,j \\ i \neq j}} a_i \, a_j \, s(\theta_i) \, d(\theta_j) \, e^{j[\phi_{ij} - w \frac{2d_{ij}}{c}]} \right)$$

où $D^*$ désigne la quantité complexe conjuguée de D, et où :

$$\begin{cases} \phi_{ij} = \phi_i - \phi_j \\ d_{ij} = d_i - d_j \end{cases}$$

Si l'on effectue le calcul de la valeur moyenne de P sur différentes cases distance du radar, la phase

$$-w\frac{2d_{ij}}{c}$$

pouvant être considérée comme aléatoire, on a :

$$E\,(P) = e^{j\,\Psi}\;E\,[\;\underset{i}{\Sigma}\;s\,(\theta_i)\;\;d\,(\theta_i)\;\;a_i^2\,] = e^{j\,\Psi}\,E\,(a)$$

où E désigne l'opérateur espérance mathématique.

Le terme "a" est réel, mais est a priori de signe inconnu à cause des facteurs d $(\theta_i)$ qui peuvent être positifs ou négatifs. En effet si l'on se reporte à la figure 2 qui représente l'allure des diagrammes somme et différence, $\Sigma$ et $\Delta$, dans le plan azimut ou dans le plan élévation, le diagramme somme présente un maximum dans la direction de l'axe de l'antenne, alors que le diagramme différence $\Delta$ présente au contraire un minimum dans cette direction, et est, de part et d'autre de cette direction, soit en phase ($\Delta$+) soit en opposition de phase ($\Delta$-) avec $\Sigma$.

Le moyennage de P ne permet alors a priori d'estimer la phase $\Psi$ qu'au signe près.

Or il se trouve que dans le plan élévation, cette ambiguïté de signe peut être levée de façon relativement simple car le signe de d $(\theta_i)$ est alors lié au rang de la case distance considérée, étant négatif pour les cases distance les plus proches et positif pour les cases distance les plus éloignées. En effectuant le moyennage de P sur les différentes cases distance, on obtient alors, après correction du signe en fonction de la case distance considérée, une estimation de la phase $\Psi$ sans ambiguïté de signe.

La présente invention a pour objet un procédé d'estimation de la phase parasite $\Psi$ tel que defini dans les revendications permettant de lever ces ambiguïtés de signe également dans le plan azimut, et dont le principe est également applicable à l'estimation de la phase parasite $\Psi$ dans le plan élévation, ainsi qu'à l'estimation de la phase différentielle $\delta\Psi$ entre les plans azimut et élévation, cette dernière possibilité constituant par ailleurs, comme on le verra par la suite, la base d'une autre méthode d'estimation de la phase parasite dans le plan azimut.

D'autres objets et caractéristiques de la présente invention apparaîtront plus clairement à la lecture de la description suivante d'exemples de réalisation, faite en relation avec les dessins ci-annexés dans lesquels :

- la figure 1 montre schématiquement la formation des voies somme et différence en azimut et en élévation dans un radar de type monopulse ;
- la figure 2 montre la forme des diagrammes somme et différence d'un radar monopulse dans le plan azimut ou dans le plan élévation ;
- la figure 3 illustre le balayage de l'antenne radar, suivant l'invention ;
- la figure 4 est un schéma synoptique du traitement effectué suivant l'invention ;
- la figure 5 est un schéma du détecteur de produit utilisé dans le traitement suivant l'invention.

L'invention est utilisée sur un système radar à émission cohérente ou non cohérente, polarisée circulairement, capable de recevoir et de discriminer polarisation circulaire droite et polarisation circulaire gauche. Pour fixer les idées dans ce qui suit, les voies azimut recevront la polarisation droite tandis que les voies élévation reçoivent la polarisation gauche ; l'inverse serait également possible.

Ainsi en se référant à une phase absolue hypothétique les signaux somme $\Sigma_a$ et $\Sigma_e$, respectivement en azimut et en élévation, et les signaux différence $\Delta_a$ et $\Delta_e$, respectivement en azimut et en élévation, s'écrivent :

$$\Sigma_a \;=\; e^{-j\,\Psi 1}\;\underset{i}{\Sigma}\;s_a\,(\theta_{Di})\;a_{Di}e^{\;j(\phi_{Di} - 2\pi\,f\,\frac{2d_{Di}}{c} + \varphi_t)}$$

$$\Sigma_e \;=\; e^{-j\,\Psi 2}\;\underset{j}{\Sigma}\;s_e\,(\theta_{Gj})\;a_{Gj}e^{\;j(\phi_{Gj} - 2\pi\,f\,\frac{2d_{Gj}}{c} + \varphi_t)}$$

$$\Delta_a \;=\; e^{-j\,\Psi 3}\;\underset{i}{\Sigma}\;d_a\,(\theta_{Di})\;a_{Di}e\;.\;{}^{\;j(\phi_{Di} - 2\pi\,f\,\frac{2d_{Di}}{c} + \varphi_t)}$$

$$\Delta_e \;=\; e^{-j\,\Psi 4}\;\underset{j}{\Sigma}\;d_e\,(\theta_{Gj})\;a_{Gj}e^{\;j(\phi_{Gj} - 2\pi\,f\,\frac{2d_{Gj}}{c} + \varphi_t)}$$

où les indices D et G désignent les voies de réception des polarisations droite et gauche, et les indices a et e les dimensions angulaires, azimut et élévation, et où $\phi_t$ désigne ia composante de phase non cohérente qui change d'impulsion à impulsion.

A partir des signaux somme et différence $\Sigma_a$, $\Sigma_e$, $\Delta_a$, $\Delta_e$, les expressions suivantes sont calculées :

$$S = \Sigma_a \cdot \Sigma_e^{*}$$

$$D = \Delta_a \cdot \Sigma_e^{*}$$

Une unité de temps étant fixée suffisamment petite pour que le déphasage entre voies puisse être considéré comme constant, on a à un instant k:

$$S(k) = e^{-j(\Psi_1 - \Psi_2)} \sum_{l,m} s_a(\theta_{Dl}) \, s_e(\theta_{Gm}) \, a_{Dl} \, a_{Gm} \cdot$$

$$e^{\, j\left( \phi_{Dl} - \phi_{Gm} - 2\pi f 2 \frac{(d_{Dl} - d_{Gm})}{c} \right)}$$

$$D(k) = e^{-j(\Psi_3 - \Psi_2)} \sum_{i,j} d_a(\theta_{Di}) \, s_e(\theta_{Gj}) \, a_{Di} \, a_{Gj} \cdot$$

$$e^{\, j\left( \phi_{Di} - \phi_{Gj} - 2\pi f 2 \frac{(d_{Di} - d_{Gj})}{c} \right)}$$

On notera que le calcul des expressions S et D permet, entre autres, de s'affranchir de la composante de phase non cohérente $\phi_t$.

On calcule alors l'expression :

$[S(k+1) - S(k-1)]D^{*}(k)$

où k-1, k et k+1 désignent trois instants successifs.

On a :

$$e^{-j(\Psi_1 - \Psi_3)} \left\{ \sum_{i,j} [s_{a(k+1)}(\theta_{Di}) - s_{a(k-1)}(\theta_{Di})] \, d_{a(k)}(\theta_{Di}) \cdot \right.$$

$$s_e^2(\theta_{Gj}) a_{Di}^2 \, a_{Gj}^2 \, +$$

$$\sum_{\substack{i \neq l \\ \text{ou} \\ j \neq m}} [s_{a(k+1)}(\theta_{Dl}) - s_{a(k-1)}(\theta_{Dl})] \, d_{a(k)}(\theta_{Di}) \, s_e(\theta_{Gj}) \, s_e(\theta_{Gm}) \cdot$$

$$a_{Di} \, a_{Gj} \, a_{Dl} \, a_{Gm} \, e^{\, j \left[ \phi_{Dl} - \phi_{Gm} - 2\pi f 2 \frac{(d_{Dl} - d_{Gm})}{c} - \phi_{Di} - \phi_{Gj} \right.}$$

$$\left. \left. - 2\pi f 2 \frac{(d_{Gj} - d_{Dl})}{c} \right] \right\} =$$

$$e^{-j(\Psi_1 - \Psi_3)} \left( a + \sum_n b_n e^{\, j \varphi_n} \right)$$

avec :

avec :

$$a = \sum_{i,j} [s_{a(k+1)}{}^{(\theta_{Di})} - s_{a(k-1)}{}^{(\theta_{Di})}] \, d_{a(k)}{}^{(\theta_{Di})} \, s^2{}_e{}^{(\theta_{Gj})} \, a^2{}_{Di} \, a^2{}_{Gj}$$

Dans l'expression $\sum_n b_n \, e^{i\phi}{}_n$, les facteurs $b_n$ sont affectés d'un terme de phase $\phi_n$ qui, pouvant être considéré comme aléatoire, diparaîtra par moyennage de l'expression :
[S(k+1) - S(k-1)] D*(k) sur plusieurs mesures successives de $\Sigma_a$, $\Delta_a$, $\Sigma_e$, $\Delta_e$ effectuées par le radar et correspondant à plusieurs instants k successifs.

La notion de mesures effectuées par le radar se rapporte à la notion de cases distance et d'impulsions. Pour une case distance donnée, le moyennage est ensuite effectué sur plusieurs impulsions successives, et le moyennage est ensuite effectué sur plusieurs cases distance. Grâce à la double polarisation les facteurs non affectés d'un tel terme de phase sont limités à l'expression "a" pour laquelle on a l'égalité i = l et j = m. Tous les autres cas (tels que i =j ou m =l) sont en effet exclus car ils correspondraient à des réflecteurs individuels qui renverraient les deux types de polarisation : droite et gauche, c'est-à-dire qui seraient à la fois du type dièdre (nombre pair de réflexions successives, et du type tièdre (nombre impair de réglexions successives).

L'invention permet donc de conserver toute l'information angulaire comprise dans les signaux reçus, tout en éliminant la non cohérence de l'émission, en les référençant à la réponse à la même impulsion de réflecteurs différents. Ceci est réalisé grâce à la combinaison du calcul des expressions S et D et de la double polarisation.

/Au cours du développement précédent il a été fait l'hypothèse importante qu'entre les instants k-1 et k+1 les angles d'élévation $\theta_e$ (en l'occurrence $\theta_G$ puisque l'on considère dans cet exemple le cas où les voies azimut reçoivent la polatisation droite tandis que les voies élévation reçoivent la polarisation gauche) sont invariants, ce qui permet leur mise en facteur commun dans l'expression "a". Cette hypothèse est raisonnable dans le cas d'un radar fixe ou d'un radar embarqué si l'unité de temps est suffisamment petite pour que l'avancement de la plate-forme ne change pas la géométrie du système.

L'invention est par ailleurs utilisée dans un système radar à balayage en azimut, la vitesse de rotation de l'antenne (en azimut) étant fixée à une valeur telle que les lobes $\Delta$ - et $\Delta$ + à l'instant k coïncident respectivement avec le lobe $\Sigma$ à l'instant k - 1, comme représenté sur la figure 3.

Dans ces conditions le produit

$$[s_{a(k+1)}{}^{(\theta_{Di})} - s_{a(k-1)}{}^{(\theta_{Di})}] \, d_{a(k)}{}^{(\theta_{Di})}$$

est positif pour tout réflecteur élémentaire "i". En effet, si on considère par exemple un réflecteur élémentaire qui se trouve à l'instant k sur le lobe $\Delta$ +, on a alors $d_{a(k)}$ qui est positif, $s_{a(k+1)}$ qui est également positif ; il en serait de même pour un réflecteur élémentaire qui serait à l'instant k sur le lobe $\Delta$-.

La vitesse de rotation de l'antenne en azimut n'est pas critique et pourrait être choisie différemment. Le choix proposé semble cependant optimal en ce qu'il donne les plus grandes valeurs de la différence $(s_{a(k+1)} - s_{a(k-1)})$.

Le facteur "a" s'écrit donc comme la somme d'un grand nombre de réels positifs. Au contraire, les facteurs bn sont affectés d'un terme de phase $\phi_n$ qui peut être considéré comme aléatoire.

L'examen de plusieurs mesures successives de [S(k+1) - (S(k-1)] D* (k) permet par moyennage d'estimer la correction de phase $\hat{\Psi}_1 - \hat{\Psi}_3$ dont la variance variera inversement au nombre de mesures effectuées, ce nombre de mesures étant fixé a priori ou adapté à la précision désirée par software.

L'adaptation de la période de répétition des mesures effectuées par le radar (correspondant à la notion de cases distances et d'impulsions) et de la période de répétition des instants k, c'est-à-dire de la vitesse de balayage de l'antenne, peut être faite de diverses façons, par exemple en choisissant convenablement la période de répétition des impulsions, ou bien en réalisant un post-intégration sur plusieurs impulsions.

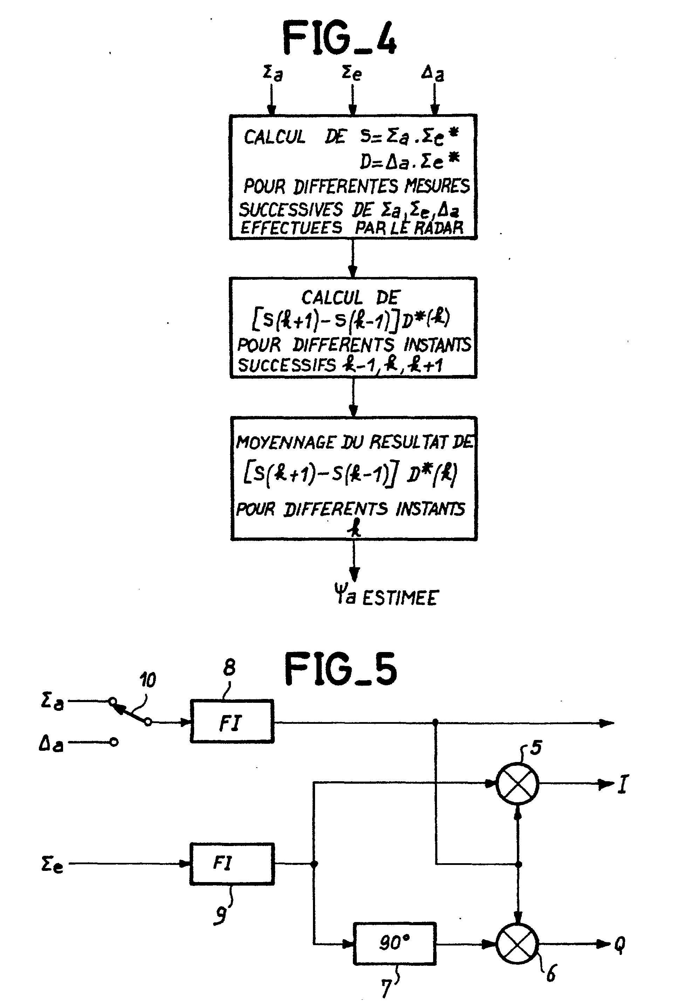

On a représenté sur la figure 5 un schéma du détecteur de produit utilisé dans le traitement effectué suivant l'invention pour estimer la phase parasite entre les voies somme et différence en azimut.

Les signaux $\Sigma_a$, $\Delta_a$ et $\Sigma_e$ sont appliqués à l'entrée de ce détecteur de produit qui calcule les expressions :

$S = \Sigma_a \cdot \Sigma_e{}^*$

$D = \Delta_a \cdot \Sigma_e{}^*$

au moyen de deux mélangeurs 5 et 6 dont l'un reçoit d'une part le signal $\Sigma_e$ et d'autre part, soit le signal $\Sigma_a$, soit le signal $\Delta_a$. Les signaux $\Sigma_a$, $\Delta_a$ et $\Sigma_e$ sont par ailleurs transformés en signaux à moyenne fréquence au moyen d'étages de changement de fréquence 8 et 9.

Il est à noter que l'on n'utilise pas S et D aux mêmes instants, puisque seul le produit [S(k+1) - S(k-1)] D*(k) importe. Il est donc possible de n'utiliser qu'un seul détecteur de produit, adressé successivement, grâce à un commutateur 10 par les voies $\Sigma_a$ et $\Sigma_c$ puis $\Delta_a$ et $\Sigma_e$.

Les grandeurs S et D sont des grandeurs complexes qui peuvent s'écrire sous la forme : I + j Q où I et Q désignent respectivement leur partie réelle et leur partie imaginaire ; les grandeurs I et Q sont obtenues sur deux sorties du détecteur de produit.

Les autres étapes du procédé peuvent être réalisées grâce à un logiciel adapté.

Dans ce qui précède, l'invention a été décrite pour l'estimation de la phase parasite entre les voies somme et différence en azimut. Le principe de l'invention est néanmoins applicable à l'estimation de la phase parasite entre les voies somme et différence en élévation.

Dans ce cas on calculerait les expressions :

$S = \Sigma_e . \Sigma_a{}^*$

$D = \Delta_e . \Sigma_a{}^*$

La contrainte sur le balayage deviendrait alors une contrainte sur le balayage en élévation, et l'hypothèse qu'entre les instants k-1, k et k+1 les angles d'azimut sont invariants devrait également être faite.

Comme on va le voir maintenant, le principe de l'invention est également applicable à l'estimation de la phase parasite différentielle $\Psi_a - \Psi_e$, où $\Psi_a$ et $\Psi_e$ désignent respectivement la phase parasite en azimut et en élévation. L'estimation de cette phase parasite différentielle peut présenter un intérêt pour les raisons suivantes.

Dans le cas notamment d'un radar porté par un missile dont la vitesse supersonique décroît en cours de vol jusqu'à des valeurs subsoniques, les écarts importants de température entre le début et la fin de la mission entraînent une variation des phases parasites en azimut et en élévation.

Or, les contraintes de balayage d'antenne exposées précédemment font que l'estimation d'un facteur correctif de phase n'est pas réalisable durant toute la période d'utilisation et de traitement du radar.

Partant de la constatation que les quatre récepteurs (deux en azimut, et deux en élévation) sont physiquement proches les uns des autres et thermiquement solidaires, donc que les variations de $\Psi_a$ et $\Psi_e$ seront similaires, il suffit alors d'évaluer $\Psi_a$ et $\Psi_e$ lors d'une phase dite de calibration (préalable à tout fonctionnement en mode recherche ou poursuite) et de calculer la différence $\Psi_a - \Psi_e$ qui restera constante pendant toute la durée du vol. En phase poursuite il est toujours possible comme rappelé dans l'introduction de calculer $\Psi_e$ par un mode d'evaluation qui n'offre aucune contrainte de position d'antenne ou de fréquence. Il est alors possible d'en déduire $\Psi_a$.

Cependant une évaluation successive de $\Psi_a$ et $\Psi_e$ au cours de la phase de calibration risque d'induire une erreur sur $\Psi_a - \Psi_e$ dans la mesure où la température peut avoir changé entre les deux évaluations. De plus, la phase de calibration a une durée importante par rapport à la durée totale de la mission d'un missile courte portée.

Le procédé d'estimation de phase parasite suivant l'invention permet de calculer directement la phase différentielle $\Psi_a - \Psi_e$ sans passer par les calculs successifs de $\Psi_a$ et $\Psi_e$, ce qui permet de s'affranchir du risque d'erreur précédemment cité.

On décrit maintenant ce procédé, appliqué à l'estimation de la phase différentielle $\Psi_a - \Psi_e$. Comme précédemment, les signaux reçus par les quatre voies d'écartométrie s'écrivent :

$$\Sigma_a = e^{-j\Psi_1} \; \sum_i s_a(\theta_{Di}) \, a_{Di} \; e^{j(\phi_{Di} - 2\pi f \frac{2d_{Di}}{c} + \varphi_t)}$$

$$\Sigma_e = e^{-j\Psi_2} \; \sum_j s_e(\theta_{Gj}) \, a_{Gj} \; e^{j(\phi_{Gj} - 2\pi f \frac{2d_{Gj}}{c} + \varphi_t)}$$

$$\Delta_a = e^{-j\Psi_3} \; \sum_i d_a(\theta_{Di}) \, a_{Di} \; e^{j(\phi_{Di} - 2\pi f \frac{2d_{Di}}{c} + \varphi_t)}$$

$$\Delta_e = e^{-j\Psi_4} \; \sum_j d_e(\theta_{Gj}) \, a_{Gj} \; e^{j(\phi_{Gj} - 2\pi f \frac{2d_{Gj}}{c} + \varphi_t)}$$

où les indices D et G désignent les voies de réception des polarisations droite et gauche (en supposant toujours que les voies azimut reçoivent la polarisation droite, et les voies élévation la polarisaton gauche) et les indices a et e les dimensions angulaires, azimut et élévation.

$a_i$ est l'amplitude du iéme réflecteur individuel ;

$0_i$ est le déphasage introduit par le ième réflecteur ;

$d_i$ est la distance radar-ième réflecteur ;

$\phi_t$ est la composante de phase non cohérente qui change d'impulsion à impulsion ;

$\Psi_1$, $\Psi_2$, $\Psi_3$, $\Psi_4$ sont les phases parasites introduites sur les quatre voies de réception.

Suivant la même méthode que précédemment, un détecteur de produit calcule :

$$S = \Sigma_a . \Sigma_e^*$$

$$D = \Delta_a . \Delta_e^*$$

Alors :

$$[S(k+1) - S(k-1)] \, D^*(k) = e^{-j(\Psi_2 - \Psi_1 + \Psi_3 - \Psi_4)}[a + \sum_n b_n e^{j\phi_n}]$$

où les phases $\phi_n$ peuvent être considérées comme des phases aléatoires et où :

$$a = \sum_{i,j} [s_{a(k+1)}(\theta_{Di}) - s_{a(k-1)}(\theta_{Di})] d_{a(k)}(\theta_{Di}) s_e(\theta_{Gj}) d_e(\theta_{Gj}) a^2_{Di} \, a^2_{Gj}$$

Or la vitesse de rotation en azimut du radar a été choisie de telle façon que le produit :

$[s_{a(k+1)}(\theta_{Di}) - s_{a(k-1)}(\theta_{Di})] \, d_{a(k)}(\theta_{Di})$ soit positif pour tous les réflecteurs élémentaires.

De plus $s_e(\theta_{Gj})$ est positif, $a^2_{Di} a^2_{Gj}$ est positif, et $d_e(\theta_{Gj})$ est négatif pour les cases distances les plus proches, et est positif pour les cases distances les plus éloignées.

L'ambiguïté de signe peut donc être levée et corrigée de telle façon que le facteur "a" soit la somme d'un grand nombre de réels positifs.

L'examen de plusieurs mesures successives de $[S(k+1) - S(k-1)] \, D^*(k)$ permet par moyennage d'estimer la correction de phase

$$\hat{\Psi}_1 - \hat{\Psi}_2 - \hat{\Psi}_3 + \hat{\Psi}_4$$

c'est-à-dire $\Psi_a - \Psi_e$.

La moyenne est calculée sur plusieurs cases distances et plusieurs impulsions de façon à obtenir la précision désirée.

## Revendications

1. Procédé de traitement des signaux somme $\Sigma$ et différence $\Delta$, en azimut : $\Sigma_a$, $\Delta_a$, et en élévation : $\Sigma_e$, $\Delta_e$, d'un radar du type monopulse, en vue d'estimer la phase parasite $\Psi$ introduite entre ces signaux par les circuits hyperfréquence (3, 4) de formation des voies somme et différence, ledit radar étant tel que l'onde radar émite est polarisée circulairement et que les récepteurs monopulse azimut (1a, 2a) et élévation (1e, 2e) ne reçoivent respectivement que l'un des types de polarisation circulaire: droite ou gauche, caractérisé en ce qu'il consiste à :

- calculer pour chaque mesure effectuée par le radar les expressions S et D, avec

$$S(k) = e^{-j(\Psi_1 - \Psi_2)} \sum_{l,m} s_a(\theta_{Dl})\, s_e(\theta_{Gm})\, a_{Dl}\, a_{Gm} \cdot$$

$$e^{\ j\left(\phi_{Dl} - \phi_{Gm} - 2\pi f 2 \dfrac{(d_{Dl} - d_{Gm})}{c}\right)}$$

$$D(k) = e^{-j(\Psi_3 - \Psi_2)} \sum_{i,j} d_a(\theta_{Di})\, s_e(\theta_{Gj})\, a_{Di}\, a_{Gj} \cdot$$

$$e^{\ j\left(\phi_{Di} - \phi_{Gj} - 2\pi f 2 \dfrac{(d_{Di} - d_{Gj})}{c}\right)}$$

(où le symbole * désigne la quantité complexe conjuguée), suivant que l'on désire estimer la phase parasite $\Psi_a$ en azimut dans le premier cas, ou la phase parasite $\Psi_e$ en élévation dans le deuxième cas ou la phase parasite différentielle $\delta\Psi = \Psi_a - \Psi_e$ dans le troisième cas,
- calculer le résultat de l'expression
[ S(k+1) - S(k-1) ] D*(k)
étant entendu que l'antenne radar balaye au cours du tenps en azimut dans le premier et dans le troisième cas, en élévation dans le deuxième et que k-1, k, k+1 désignent trois instants successifs tels que la différence $s_{(k+1)}(\theta) - s_{(k-1)}(\theta)$ soit de même signe que $d_{(k)}(\theta)$, où $s_{(k+1)}(\theta)$ et $S_{(k-1)}(\theta)$ désignent respectivement le gain de la voie somme à l'angle $(\theta)$, en azimut dans le premier et dans le troisième cas, en élévation dans le deuxième cas, respectivement aux instants k+1 et k-1, et où $d_{(k)}(\theta)$ désigne le gain de la voie différence à l'angle $\theta$ et à l'instant k, en azimut dans le premier et dans le troisième cas, en élévation dans le deuxième cas;
- calculer la valeur moyenne du résultat de l'expression précédente pour plusieurs instants successifs correspondant à plusieurs mesures effectuées successivement par le radar lors des impulsions successives, valeur qui correspond à une expression de la forme $e^{j\Psi} \cdot a$, où "a" un nombre réel de valeur absolue et signe déterminés,
- calculer la phase parasite $\Psi$ à partir de ladite valeur moyenne.

2. Procédé selon la revendication 1, caractérisé en ce que la phase parasite différentielle $\delta\Psi$ est estimée dans une phase de calibration préalable à la phase d'utilisation du radar en mode recherche ou poursuite, et mettant en oeuvre un balayage d'antenne, et en ce que la phase parasite $\Psi_a$ en azimut est ensuite déduite, au cours de la phase d'utilisation du radar, de la phase parasite différentielle $\delta\Psi$ ainsi estimée au cours de la phase de calibration, et de la phase parasite en élévation $\Psi_e$ estimée au cours de la phase d'utilisation du radar, sans mise en oeuvre un balayage d'antenne on élévation, par moyennage de l'expression $\Sigma_e \cdot \Delta_e^*$ sur plusieurs mesures successives effectuées par le radar.

3. Procédé selon l'une des revendications 1 et 2, caractérisé en ce que, seul le produit [ S(k+1) - S(k-1)] D*(k) important, les expressions S et D sont calculées au moyen d'un dispositif unique utilisé successivement pour le calcul de S et D.

## Patentansprüche

1. Verfahren zur Verarbeitung der Summen- und Differenzsignale ($\Sigma$, $\Delta$) für den Azimut ($\Sigma a$, $\Delta a$) und den Erhebungswinkel ($\Sigma e$, $\Delta e$) eines Monopulsradars, zur Abschätzung des Phasenfehlers $\Psi$, der zwischen diesen Signalen durch die Mikrowellenkreise (3, 4) zur Bildung der Summen- und Differenzkanäle eingeführt wird, wobei das Radargerät so ausgebildet ist, daß die ausgesendete Radarwelle zirkular polarisiert ist und daß die Monopulsempfänger in Azimutrichtung (1a, 2a) und in Erhebungsrichtung (1e, 2e) jeweils nur eine Art Zirkularpolarisation empfangen, nämlich rechts- oder linksdrehend, dadurch gekennzeichnet, daß das Verfahren darin besteht,
- für jede durch das Radargerät durchgeführte Messung die Größen S und D zu berechnen, wobei

$$\begin{cases} S = \Sigma_a \cdot \Sigma_e^{*} \\ D = \Delta_a \cdot \Sigma_e^{*} \end{cases}$$

$$\text{oder} \quad \begin{cases} S = \Sigma_e \cdot \Sigma_a^{*} \\ D = \Delta_e \cdot \Sigma_a^{*} \end{cases}$$

$$\text{oder} \quad \begin{cases} S = \Sigma_a \cdot \Sigma_e^{*} \\ D = \Delta_a \cdot \Delta_e^{*} \end{cases}$$

(hierbei bezeichnet das * die komplexe konjugierte Größe), je nachdem, ob man den Phasenfehler $\Psi_a$ in Azimutrichtung (erster Fall) oder den Phasenfehler $\Psi_e$ in Erhebungsrichtung (zweiter Fall) oder den differentiellen Phasenfehler $\delta\Psi = \Psi_a - \Psi_e$ abschätzen will (dritter Fall),

— das Ergebnis des folgenden Ausdrucks zu berechnen:

$[S(k+1)-S(k-1)3D^{*}(k)$

wobei natürlich die Radarantenne eine zeitliche Abtastung in Azimutrichtung (im ersten und im dritten Fall) bzw. in Erhebungsrichtung (im zweiten Fall) durchführt und k−1, k, k+1 drei aufeinanderfolgende Zeitpunkte bestimmen, derart, daß die Differenz $s_{(k+1)}(\Theta) - s_{(k-1)}(\Theta)$ das gleiche Vorzeichen wie $d_{(k)}(\Theta)$ besitzt, wobei $s_{(k+1)}(\Theta)$ und $s_{(k-1)}(\Theta)$ den Verstärkungsgrad des Summenkanals beim Winkel $\theta$ in Azimutrichtung (im ersten und im dritten Fall) bzw. in Erhebungsrichtung (im zweiten Fall) zu den Zeitpunkten k+1 bzw. k−1 bedeuten und wobei $d_{(k)}(\Theta)$ den Verstärkungsgrad des Differenzkanals beim Winkel $\theta$ und zum Zeitpunkt k in Azimutrichtung (für den ersten und dritten Fall) bzw. in Erhebungsrichtung (im zweiten Fall) bezeichnet,

— den Mittelwert des Ergebnisses des obengenannten Ausdrucks über mehrere aufeinanderfolgende Zeiträume entsprechend mehreren durch das Radargerät während aufeinanderfolgender Impulse durchgeführter Messungen zu berechnen, wobei dieser Mittelwert einem Ausdruck der Form $e^{j\Psi}.a$ entspricht, in der a eine reelle Zahl eines bestimmten Absolutwerts und eines bestimmten Vorzeichens darstellt,

— den Phasenfehler $\Psi$ ausgehend von diesem Mittelwert zu berechnen.

2. Verfahren nach Anspruch 1, dadurch gekennzeichnet, daß der differentielle Phasenfehler $\delta\Psi$ in einer der Nutzphase des Radargeräts im Such- oder Folgemodus vorausgehenden Eichphase geschätzt wird, wobei die Antenne eine Abtastbewegung durchführt, und daß der Phasenfehler $\Psi_a$ in Azimutrichtung dann während der Nutzphase des Radargeräts von dem während der Eichphase geschätzten differentiellen Phasenfehler $\delta\Psi$ und von dem während der Nutzphase des Radargeräts geschätzten Phasenfehler $\Psi_e$ in Erhebungsrichtung abgeleitet wird, ohne daß dabei die Antenne eine Abtastbewegung in Erhebungsrichtung durchführt, und zwar durch Ausmitteln des Ausdrucks $\Sigma_e \cdot \Delta_e^{*}$ über mehrere aufeinanderfolgend von dem Radargerät durchgeführte Messungen.

3. Verfahren nach einem der Ansprüche 1 und 2, dadurch gekennzeichnet, daß für den Fall, daß nur das Produkt $[S(k+1) - S(k-1)] D^{*}(k)$ von Bedeutung ist, die Ausdrücke S und D mit Hilfe einer einzigen Rechenvorrichtung berechnet werden, die nacheinander für die Berechnungen von S und D verwendet wird.

**Claims**

1. A method of processing sum and difference signals ($\Sigma$, $\Delta$) in azimuthal direction ($\Sigma a$, $\Delta a$) and in elevation direction ($\Sigma e$, $\Delta e$) in a monopulse radar for estimating the parasitic phase $\Psi$ between these signals caused by the microwave circuits (3, 4) forming the sum and the difference channels, said radar being conceived such that the transmitted radar wave is of the circular polarisation type and that the monopulse receivers in azimuthal (1a, 2a) and in elevation direction (1e, 2e) only receive one of both types of circular polarisation, the right turning or left turning type, characterized in that it consists in

— calculating the terms S and D for each measurement performed by the radar with

$$\begin{cases} S = \Sigma_a \cdot \Sigma_e^* \\ D = \Delta_a \cdot \Sigma_e^* \end{cases}$$

$$\text{or} \quad \begin{cases} S = \Sigma_e \cdot \Sigma_a^* \\ D = \Delta_e \cdot \Sigma_a^* \end{cases}$$

$$\text{or} \quad \begin{cases} S = \Sigma_a \cdot \Sigma_e^* \\ D = \Delta_a \cdot \Delta_e^* \end{cases}$$

(wherein the * signifies the conjugated complex quantity), depending on the type of parasitic phase to be estimated, namely $\Psi_a$ in azimuthal direction for the first case, $\Psi_e$ in elevation direction for the second case or the differential parasitic phase $\delta\Psi = \Psi_a - \Psi_e$ for the third case,

– calculating the result of the following term:

$[S(k+1) - S(k-1)]D^*(k)$

whereby the radar antenna performs a scanning movement in time and in azimuthal direction in the first and in the third case and in elevation direction in the second case and whereby k–1, k, k+1 define three successive instants such that the difference $s_{(k+1)}(\Theta) - s_{(k-1)}(\Theta)$ the same sign as $d_{(k)}(\Theta)$, wherein $s_{(k+1)}(\Theta)$ and $S_{(k-1)}(\Theta)$ define respectively the gain of the sum channel at the angle $\Theta$, namely in azimuthal direction in the first and the third case and in elevation direction in the second case at the instants k+1 and k–1 respectively, and wherein $d_{(k)}(\theta)$ defines the gain of the difference channel at the angle $\Theta$ and at the instant k in azimuthal direction in the first and third case and in elevation direction in the second case,

– calculating the mean value of the result of the preceding term for several consecutive instants corresponding to several measurements performed successivley by the radar during successive pulses, this value corresponding to an expression of the kind $e^{j\Psi} \cdot a$, wherein a is a real number of predetermined absolute value and sign,

– calculating the parasitic phase $\Psi$ on the basis of said mean value

2. A method according to claim 1, characterized in that the differential parasitic phase $\Psi$ is estimated in a first calibration step preceding the phase of normal use of the radar in the search or follow-up mode, and implying an antenna scan, and that the parasitic phase $\Psi_a$ in azimuthal direction is then deduced during the phase of normal use of the radar from the differential parasitic phase $\delta\Psi$ which has been estimated during the calibration step, and from the parasitic phase in elevation direction $\Psi_e$ estimated during the phase of normal use of the radar without any antenna scan in elevation direction, by means of averaging the term $\Sigma_e \cdot \Delta_e^*$ along several consecutive measurements performed by the radar.

3. A method according to one of claims 1 and 2, characterized in that, only the product $[S(k+1) - S(k-1)]D^*(k)$ being important, the terms S and D are calculated by means of a unique calculating device used successively for calculating the terms S and D.

FIG_1

MOYENS DE FORMATION DES VOIES Σ ET Δ EN AZIMUT

MOYENS DE FORMATION DES VOIES Σ ET Δ EN ELEVATION

FIG_2

FIG_3

## FIG_4

$\Sigma_a$  $\Sigma_e$  $\Delta_a$

CALCUL DE $S = \Sigma_a . \Sigma_e^*$
$D = \Delta_a . \Sigma_e^*$
POUR DIFFERENTES MESURES
SUCCESSIVES DE $\Sigma_a, \Sigma_e, \Delta_a$
EFFECTUEES PAR LE RADAR

CALCUL DE
$[S(\ell+1) - S(\ell-1)]D^*(\ell)$
POUR DIFFERENTS INSTANTS
SUCCESSIFS $\ell-1, \ell, \ell+1$

MOYENNAGE DU RESULTAT DE
$[S(\ell+1) - S(\ell-1)]D^*(\ell)$
POUR DIFFERENTS INSTANTS
$\ell$

$\Psi_a$ ESTIMEE

## FIG_5

$\Sigma_a$ — 10

$\Delta_a$ —

8  FI

$\Sigma_e$ — FI  9

90°  7

5  I

6  Q